# EUROPEAN PATENT SPECIFICATION

(11) **EP 3 923 645 B1**
(45) Date of publication and mention of the grant of the patent: **04.09.2024**
(21) Application number: 20205018.3
(22) Date of filing: 30.10.2020
(51) Int. Cl.: H04W 68/02

(54) **METHOD FOR EFFICIENTLY PAGING APPLICATION-RELATED INTERNET-OF-THINGS DEVICES**
VERFAHREN ZUM EFFIZIENTEN PAGING VON ANWENDUNGSBEZOGENEN INTERNET-DER-DINGE-VORRICHTUNGEN
PROCÉDÉ DE RADIOMESSAGERIE EFFICACE DE DISPOSITIFS D'INTERNET DES OBJETS LIÉS À UNE APPLICATION

(30) Priority: 09.06.2020 EP 20178946
(43) Date of publication of application: 15.12.2021
(73) Proprietor: Shenzhen Goodix Technology Co., Ltd., Shenzhen, Guangdong 518045 (CN)
(72) Inventor: Kurth, Mathias, 01277 Dresden (DE)
(74) Representative: Lippert Stachow Patentanwälte Rechtsanwälte Partnerschaft mbB

(56) References cited:
- CN-A- 108 566 299
- US-A1- 2014 241 354
- US-A1- 2018 184 246
- HUAWEI TECHNOLOGIES CO ET AL: "Paging for Cellular IoT", vol. TSG GERAN, no. Ljubljana, Slovenia; 20140825 - 20140829, 24 August 2014 (2014-08-24), XP050779861, Retrieved from the Internet <URL:http://www.3gpp.org/ftp/Meetings_3GPP_SYNC/GERAN/Docs/> [retrieved on 20140824]
- VERMA SHIKHAR ET AL: "Energy-Efficient Group Paging Mechanism for QoS Constrained Mobile IoT Devices Over LTE-A Pro Networks Under 5G", IEEE INTERNET OF THINGS JOURNAL, IEEE, USA, vol. 6, no. 5, 1 October 2019 (2019-10-01), pages 9187 - 9199, XP011749836, DOI: 10.1109/JIOT.2019.2928589
- "3rd Generation Partnership Project; Technical Specification Group Services and System Aspects; Study on architecture enhancements for Cellular Internet of Things (Release 13)", 24 March 2016 (2016-03-24), XP051086108, Retrieved from the Internet <URL:http://www.3gpp.org/ftp/tsg_sa/WG2_Arch/Latest_SA2_Specs/Rel-13/> [retrieved on 20160324]

## Description

The invention relates to a method for efficiently paging application-related Internet-of-Things devices.

Paging is a well-known technique in cellular networks. When there is no data or voice session going, the user equipment (UE) might enter so-called idle mode to save battery power. In idle mode, the UE will regularly receive the paging channel in order to detect mobile terminated (MT) call setup attempts. In-between paging occasions, the UE will enter a power save mode.

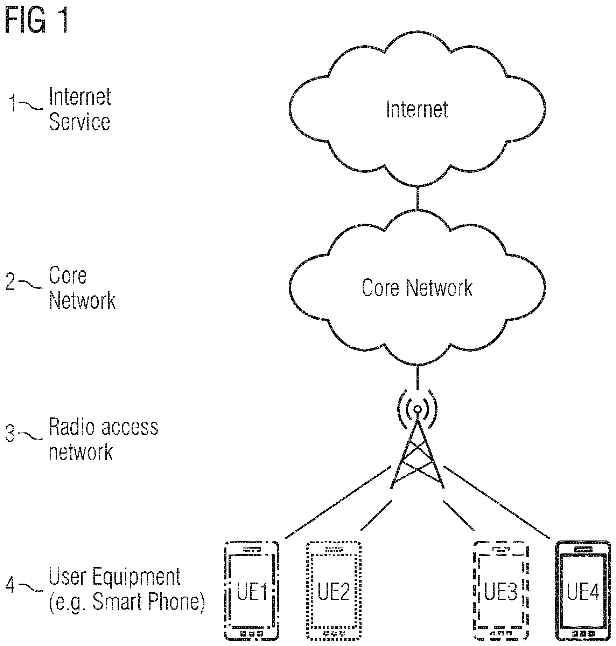

In the following, the basic principle of paging is illustrated using a typical deployment scenario for mobile broadband use cases as shown in figure 1. In this use case, mobile user equipment (UE) terminals (e. g. smart phones) periodically exchange data with the Internet. The UE accesses the Internet via the cellular network consisting of the radio access network (RAN) as well the core network (CN). In-between data sessions, the user equipment is in idle mode in terms of the radio access, i. e. it is periodically monitoring the paging channel for mobile terminated data.

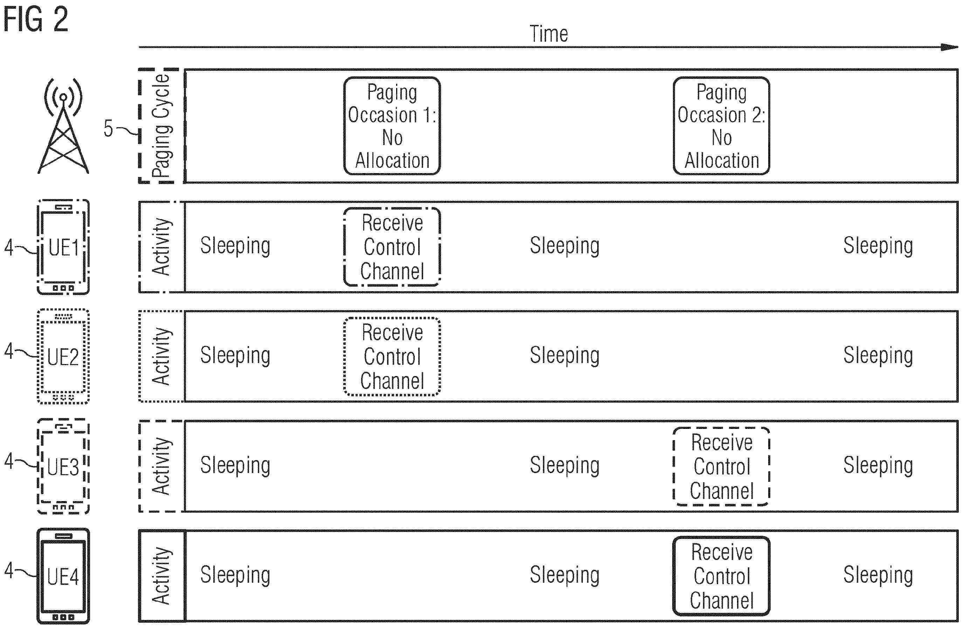

Paging is a periodic RAN procedure with typical paging cycles between 300 ms up and 10 seconds. As shown in figure 2, the RAN provides multiple paging occasions (POs) per paging cycle. On the one hand, every UE is assigned to exactly one PO within the cycle. On the other hand, there are generally multiple UEs assigned to one PO. In the example shown in figure 2, the RAN provides two POs. Both, UE1 and UE2, are assigned to PO1 and the other UEs, UE3 and UE4, are assigned to the second PO2.

The UE monitors the assigned PO for incoming paging messages in the following way. It is waking up from sleep at the start of the PO in order to receive the signal from the RAN base station. The paging reception comprises a control channel signal from the base station informing the receiving UEs about essential information to receive the following shared channel transmission containing the actual paging message. In case there is no mobile terminated data for any UE in the associated PO, the base station will not send any control nor shared channel transmission. The absence of a control channel at the UE indicates the absence of any mobile terminated data for the considered UE. This case is illustrated in figure 2, where the base station does not send any control channel for both POs in the considered paging cycle. On detection of the absence of the control channel, the UE turns off the cellular receiver and enters sleep again to preserve power.

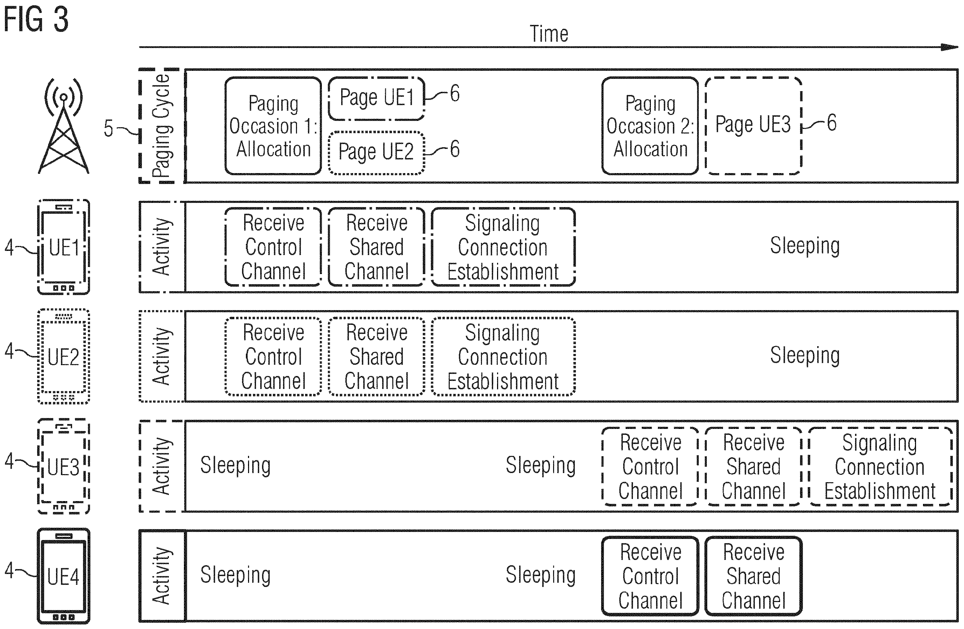

A paging cycle with paging messages is shown in figure 3. The base station sends the control channel in PO1 in order to announce the upcoming shared channel transmission directed to UE1 and UE2. Paging is a broadcast message that is received by a group of UEs in the same PO. The paging message contains furthermore identifiers listing the UEs that shall further process the paging message. These identifiers could be a Temporary Mobile Subscriber Identity (TMSI) or an International Mobile Subscriber Identity (IMSI). On reception of the paging message from the shared channel, the UE determines whether the paging message contains one of its identifications and, in this case, continues according to the cellular protocol specifications, e. g. it might initiate the signaling connection establishment to start a voice or data session. Thus, two conditions need to be fulfilled to successfully page a UE. Firstly, the presence of a control channel transmission as well as secondly, matched identities in the paging message. In all other cases, the UE will enter power save again.

The paging message is a broadcast message within the coverage area of the base station. It is received by all UEs in the same PO, however, it is processed further only by UEs addressed in the paging message by identity. In figure 3, the first paging message contains two identities of both UE1 and UE2. In the second PO, however, there is only a single identity of UE3. In this case, UE4 will stop the receiver after reception of the paging message on the shared channel and enter power save again.

The assignment of UEs to POs is done pseudo-randomly based on the identity of the UE itself. The target of this assignment is to achieve a uniform distribution in order to balance the paging load across all POs in the paging cycle. The underlying assumption is that there are no correlations between UEs regarding mobile terminated call events, which is a reasonable assumption for the mobile broadband use case. In HUAWEI TECHNOLOGIES CO ET AL: "Paging for Cellular IoT", 3GPP DRAFT; GP-140569, 24 August 2014 it is suggested that a cellular IoT device may have a permanent group identity in a core network. The core network is able to page the cellular IoT group, which has a same group identity contained in retrieval request from cellular IoT server/user as in legacy system. The group identity can be used by the base station to calculate the paging occasion when cellular IoT devices wake up and the group identity needs to be also included in paging message.

As briefly discussed before, the cellular paging in cellular networks is efficient for mobile broadband as well as traditional voice call use cases. This comes by no surprise, since these use cases have been within the design targets for cellular paging. The traditional paging procedure has been applied to cellular Internet of Things (IoT) use cases and systems, as well. However, IoT applications are exhibiting differentiating requirements with respect to traditional cellular broadband and voice communication:
- IoT applications generally comprise application logic (running in data centers in the cloud or on the cellular edge) and sensor and actuator nodes (IoT devices);
- The IoT application requirements dictate the physical placement of IoT devices that are often challenging with respect to wired infrastructure access such as energy and network;
- Overcoming the location challenges, IoT devices use robust cellular IoT protocols for wireless network access; Furthermore, IoT devices often use batteries, so that tight energy constraints apply;
- The sensor and actuator nodes are often dedicated to one particular application (single purpose);
- Depending on the application, the traffic patterns might exhibit strong correlation in space and time domain;
- Depending on the application, the mobility of IoT devices is low;
- Depending on the application, a group of IoT devices (sensors or actuators) need to be consulted to successfully fulfill an IoT use case;
- IoT use cases are having RAN-internal triggers (e. g. from sensor nodes) as well as RAN-external triggers (e. g. clients interacting with the IoT cloud service);
- Both, the IoT application as well as the IoT use case might involve a large number of devices within the same geographical area.

It is desirable to address the shortcomings of the traditional cellular paging solution in terms of supporting the efficient paging of a group of IoT devices exhibiting strong temporal and spatial correlations in the traffic patterns. Therefore, an illustrative scenario will be introduced to motivate the problem. The shortcomings of the traditional paging solution that are addressed by the invention will be highlighted, and real-world use cases will be presented to demonstrate the practical relevance of this problem.

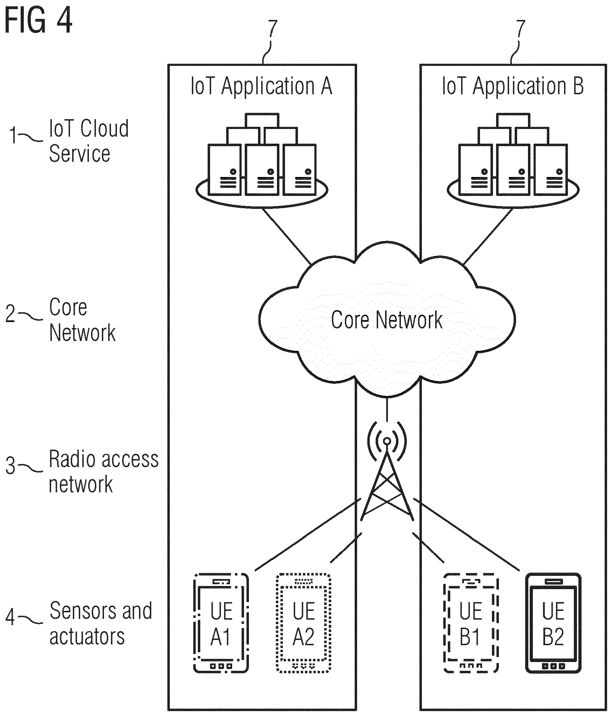

A typical cellular IoT deployment is shown in figure 4. A typical cellular IoT application comprises the IoT business logic running within the IoT service cloud and associated IoT devices (sensors and actuators). The IoT devices might be deployed in challenging locations with respect to wired infrastructure access. For that reason, the latter are often running on batteries, and they are using wireless cellular connectivity to access the IoT business logic. The IoT devices are generally dedicated to one IoT application. In-between IoT devices and cloud, both the RAN and the CN are shared between IoT applications (see figure 4).

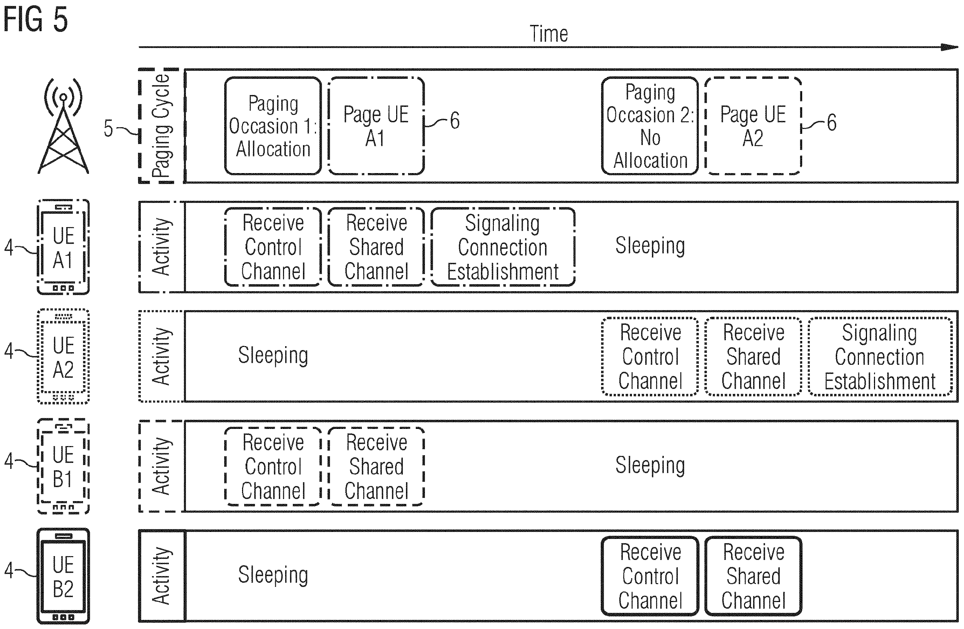

In order to illustrate the shortcomings of the traditional paging solution, a scenario of the typical cellular IoT deployment introduced above will be considered and is shown in figure 5. IoT application A consists of mobile terminated data for the UEs A1 and A2, both associated to the same RAN base station. The traditional paging procedure assigns POs to UEs in a pseudo-random fashion, so that it might happen that both UEs A1 and A2 are assigned to different POs as shown. Thus, the network needs to send two paging messages in both shown POs in order to reach both UEs A1 and A2. As the RAN is shared between IoT applications, and paging is a broadcast message, also the UEs B1 and B2 of IoT application B are receiving the control and shared channel transmission of the paging message. However, they will enter power save thereafter due to unmatched identities.

The traditional paging procedure shows the following disadvantages when the traffic pattern of the IoT application shows temporal and spatial correlations, i. e. when the IoT cloud application tries to reach multiple IoT devices within the same location at the same time:
On the one hand, the IoT devices of the considered IoT application cannot be grouped into the same paging time resources as well as frequency resources. Instead, the paging resources are assigned pseudo-randomly. From a network perspective, more paging resources are required to fulfill the application use case. Coming back to the cellular IoT scenario from figure 5, the base station needs to send two paging messages to reach UE A1 and A2. Thus, the spectral efficiency might be lowered since more spectrum resources must be allocated to paging, so that they cannot be used for other purposes like unicast traffic.

Furthermore, the latency of the paging procedure is prolonged to reach all IoT devices within the group. Similar to time resources for paging as discussed so far, cellular IoT technologies might partition UEs along other resource dimensions like frequency, where the methods described within this invention apply, as well. An example for the latter is paging on non-anchor carriers in NB-IoT.

In CN 108566299 A an IoT cloud platform terminal group management method is disclosed, which is used for performing grouping management on terminal devices based on an IoT cloud platform. The method uses a terminal group filtering condition, which is established by using terminal attribute parameter conditions; a series of devices satisfying the filtering condition are attributed to the same terminal group and thereby improving the terminal management efficiency.

Another example is non patent document HUAWEI TECHNOLOGIES CO ET AL: "Paging for Cellular IoT",3GPP DRAFT; GP-140569, 24 August 2014.

On the other hand, the IoT devices of one IoT application have to receive paging messages targeting different IoT applications. IoT devices have to spend energy to receive irrelevant messages. In figure 5, for example, the IoT devices UE B1 and B2 have to receive both control and shared channel associated with the POs 1 and 2, respectively. The higher energy consumption leads to lower battery life time of the IoT devices.

Many IoT applications show traffic patterns with correlations in time and space, which means they are located in the same place and should be reached at the same time. Two exemplary IoT applications will be presented in order to illustrate the relevance of the addressed issue.

The first use case is a hazard alarming application where a group of IoT sensors is consulted in case of a potential hazard. A large number of sensors for hazards like fire, water, gas, etc. are deployed within a geographical area to protect, which might be a residential building or an industrial complex, for example. The IoT hazard sensors monitor their surroundings and report any suspicion of a hazard event. As soon as the first hazard report arrives, the IoT cloud application queries the neighbors of the reporting IoT device to eliminate false alarms as well as to estimate a potential direction where the hazard evolves to. A second use case relies to groups of actuators. In the residential as well as industrial domain, home automation has been introduced for controlling lighting and window blinds, for example. There is often a single trigger for a group of actuators, like the sundown event for lighting or high wind speeds for outside blinds. When this event is triggered, then a group of IoT actuators need to be informed to initiate the expected reaction.

For IoT applications that use a group of IoT devices whose traffic patterns correlate in time and space, it is desirable to support paging for said group of IoT devices belonging to one IoT application in an efficient manner by changing the allocation of paging resources to the IoT devices in such a way that the IoT application can control the allocation of the IoT devices to the paging resources.

It is therefore an objective of the present invention to provide a method for selecting paging groups of IoT devices that belong to the same IoT application instead of using a pseudo-random assignment.

The objective will be solved by a method according to independent claim 1. For efficiently paging Internet-of-Things devices (IoT devices) which periodically exchange data with IoT cloud services via a cellular network comprising a radio access network (RAN), and a core network (CN), whereas a paging configuration of said IoT devices is maintained in the CN and provided to the RAN on need basis and a paging channel for mobile terminated data is periodically monitored by said IoT devices, the IoT devices are assigned and grouped to a same paging occasion within a paging cycle due to traffic patterns of said IoT devices that are correlated in time and space. According to a first variant of the inventive method, the IoT devices belong to one IoT application which is located in the IoT cloud service, wherein IoT devices belonging to static and/or low mobility IoT applications are grouped into the same paging time and/or frequency resources by using an interface between the CN and the IoT cloud service for exchanging information between the IoT application and the CN, whereas a decision logic about paging groups is placed into a cloud backend of the IoT application.

In order to support the paging of a group of IoT devices belonging to one IoT application having traffic patterns that are correlated in time and space in an efficient manner, it is proposed to change the assignment of paging resources to IoT devices in the following way. Instead of using a pseudo-random assignment, the IoT application is able to control the assignment of its IoT devices to paging resources. Paging resources is more general than paging occasion. Paging occasion emphasizes the time domain, whereas other dimensions exist like frequency resources, aka paging carrier. The assignment shall allow grouping of IoT devices that are likely paged at the same time.

A paging configuration is understood as the time and frequency resources for paging assigned to a particular IoT device and contains the paging occasion as well as the paging carrier. Hence, a paging occasion is a subframe within a paging frame when the UE or IoT device wakes up and starts to monitor the paging channel for a network-selected amount of subframes. A PO in NB-IoT just refers to the start sub-frame of the Narrowband physical downlink control channel (NPDCCH) (ETSI 36.304, chap. 7.1). The following NPDCCH repetition sub-frames need to be received even though they are not covered by the term PO.

For IoT applications, the inventive method provides the following benefits: The energy consumption will be reduced due to lower paging traffic load and hence battery life time can be prolonged. The latency of a single group paging procedure will be reduced.

For the cellular IoT network, the invention provides the following benefits: On RAN base station side a higher spatial efficiency can be obtained due to more efficient scheduling of paging, so that more downlink resources are available for other purposes like unicast traffic. One has the opportunity to provide service differentiation to customers such as availability as well as latency guarantees when providing dedicated paging resources tailored to the IoT application.

A beneficial feature of the inventive method for IoT devices belonging to static and/or low mobility IoT applications is the usage of an interface between the CN and the IoT cloud.

The CN provides an interface for the IoT cloud service "Cloud-CN API", which requires an extension of the existing 3GPP specifications. With this solution, the decision logic about paging groups can be placed into the cloud backend of the IoT application, where generally more powerful computation capacity is available. Furthermore, the total cost of ownership for this solution is generally lower due to a centralization, more compute power and less energy constraints compared to a solution running on the embedded IoT devices. This solution is particular beneficial for static and low mobility applications. The decision logic is an intelligence that the IoT cloud service needs to determine an optimized association of paging resources to IoT devices according to some optimization objective based on the knowledge about application traffic pattern as well as IoT device position. For the example of hazard alarming, the objective could be to minimize false alarm rate while guaranteeing an alarming response time.

In a second variant of the inventive method, IoT devices belonging to higher mobility applications are grouped into the same paging time and/or frequency resources by using an interface between the CN and the IoT device for exchanging information between the IoT device and the CN, whereas the decision logic about paging groups remains in the IoT device and the IoT device updates its paging group when it roams between RAN base stations based on internal rules. Higher mobility applications means IoT devices that are not located in the same location all the time. The exchanging information between the IoT device and the CN means assigning an IoT device X with paging resource Y consisting of PO and paging carrier. The internal rules are comparable with the decision logic mentioned above. Main difference is that the decision is carried out on the IoT device instead of the cloud. One extreme option could be: execute centralized optimization as above, but communicate outcomes to IoT device to carry them out. The extreme on the other hand is to solve the optimization locally on the IoT device without involving the cloud. For example, an internal rule could consist of selecting the paging group according to a pre-shared association of base station to paging group.

So, for applications with higher mobility demand, in particular, a distributed solution running on the embedded IoT devices might be desirable. The CN shall provide an interface to the UEs or IoT devices "Device-CN API", which is also an extension of the existing 3GPP specifications. A `Tracking area update request' message is used in LTE/NB-IoT to refresh or change UE registration in CN (see ETSI 24.301). The message might be extended with the requested paging resources. The `Tracking area update accept' message shall be extended similarly to inform UE about CN decision. A mobile IoT device is then able to update its paging group when it roams between RAN base stations based on internal rules without the need to contact the IoT cloud service before. Thus, the load on the IoT cloud service is reduced and the latency of paging re-grouping lowered.

In another variant but not belonging to the inventive method, IoT devices used in already existing 4G networks and belonging to the same IoT application use re-provisioning by loading a SIM profile into an eSIM or iSIM, whereas the IoT device changes its International Mobile Subscriber Identity, IMSI, of the SIM profile within the network and also changes its paging resources.

As the above variants require extensions of the 3GPP specifications that take time to be agreed and rolled out in the networks, this variant uses "re-provisioning" that can be used already with existing networks. The pseudo-random assignment of paging resources in today's 4G networks depends upon the IMSI that is stored on the subscriber identification module (SIM) card. Traditionally, the SIM card was supplied physically from the cellular operator. With the advent of embedded-SIM (eSIM) and integrated-SIM (iSIM), it has become state of the art to supply only the SIM profile digitally on demand from the cellular operator whereas the actual SIM hardware is supplied otherwise. The process of loading a SIM profile into an eSIM or iSIM is called (re-)provisioning. Using the re-provisioning procedure, the IoT device is now able to change its IMSI within the network and, thus, it also changes its paging resources. By appropriately selecting the IMSIs beforehand, the proposed invention now allows to assign groups to IoT devices for paging purposes. The benefit of this solution is the immediate availability within current networks, but it comes at the expense of more signaling traffic. A further limitation is that only the IMSI can be changed, which determines the idle mode DRX resources, but not the TMSI that determines the extended DRX resources.

In another further variant of the inventive method, the IoT application combines the usage of multiple interfaces according to which solution fits best the application use case, respectively.

The cellular network might provide multiple interfaces, for example said aforementioned interfaces to change the association of devices to paging resources. Making a decision which interface will be used and fits best different criteria could be used, for example the availability of interface in the operator network, the mobility of the IoT device, network traffic limitations and so on.

In a variant of the inventive method, paging resources are separated for mobile and static IoT devices. This way, it would be possible to use higher spectral efficiency when paging static IoT devices or UEs, since the channel variations will be low under static conditions.

In a further variant of the inventive method, paging resources are dedicated to one IoT application and/or a selected group of IoT applications and are separated from legacy paging resources. In legacy LTE and NB-IoT, the legacy paging resources are configured in the common system information of the base station, and they are shared by all IoT devices within the cell. Having dedicated paging resources enables the network to provide service differentiation to its customers such as availability as well as latency guarantees.

In another variant of the inventive method, a single paging group identifier is assigned to all associated IoT devices for static IoT devices and fixed paging groups.

The presented method did rely on the legacy paging message content, which lists the identifiers of the UEs to be paged. For static UEs or IoT devices and fixed paging groups, it is more efficient to assign a single paging group identifier to all associated IoT devices. The paging group identifier reduces the size of the paging message, which increases the spectrum efficiency as well as the power consumption from network and device point of view, respectively.

In another further variant, the inventive method is applied to cellular networks, in particular NB-IoT and eMTC.

And furthermore, in a further variant, the inventive method is applied to 5G based cellular technologies, like NR-Lite.

The paging procedure in cellular networks as discussed above is a broadcast on radio access network level to initiate a unicast traffic session to one or multiple UEs. 3GPP offers also features for multicast and broadcast traffic sessions, which are Evolved Multimedia Broadcast Multicast Services (eMBMS) in 4G networks and Single Cell Point To Multipoint (SC-PTM) for NB-IoT. The main differentiation of the presented solution to the existing multicast and broadcast features is the underlying traffic pattern. The latter are designed to efficiently support periodic and steady download traffic addressing a group of UEs. The invention, on the other hand, improves the paging procedure, a broadcast operation, which is used to start any kind of unicast traffic session.

The various aspects claimed may be embodied in various forms. The description shows by way of illustrating various combinations and configurations in which the aspects may be practiced. It is understood that the described aspects and / or embodiments are merely examples, and that other aspects and / or embodiments may be utilized and structural and functional modifications may be made without departing from the scope of the present disclosure.

The invention will be explained in more detail using exemplary embodiments.

The appended drawings show
- Fig. 1: Mobile Broadband Deployment Scenario (State-of-the-art);
- Fig. 2: Paging Cycle without Paging Messages (State-of-the-art);
- Fig. 3: Paging Cycle with Paging Messages for UEs 1, 2, and 3 (State-of-the-art);
- Fig. 4: Cellular IoT Deployment Scenario;
- Fig. 5: Application A pages a group of devices according to the state-of-the-art with the traditional paging procedure;
- Fig. 6: Application A pages a group of devices according to the inventive method;
- Fig. 7: IoT application controls assignment of paging resources (examples).

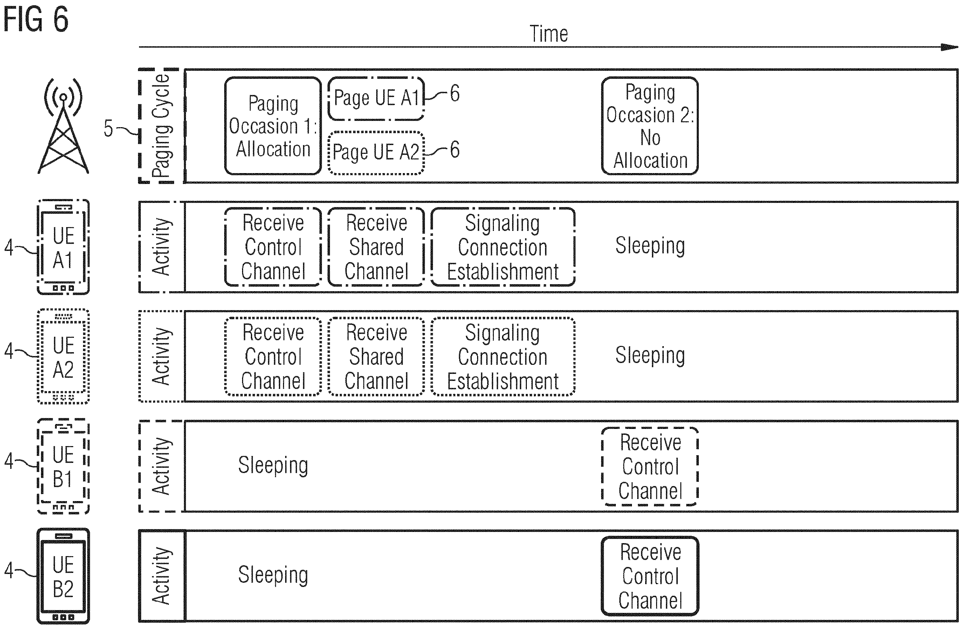

For the cellular IoT use case with the pseudo-random assignment considered above and shown in figure 5, figure 6 shows the resulting paging scenario using the proposed method. IoT application A has requested to put UEs A1 and A2 into one group for paging, so that both IoT devices can be paged within the same PO. At the same time, paging resources are freed for the usage of IoT application B, so that UEs B1 and B2 do not suffer any more for paging with unmatched identities.

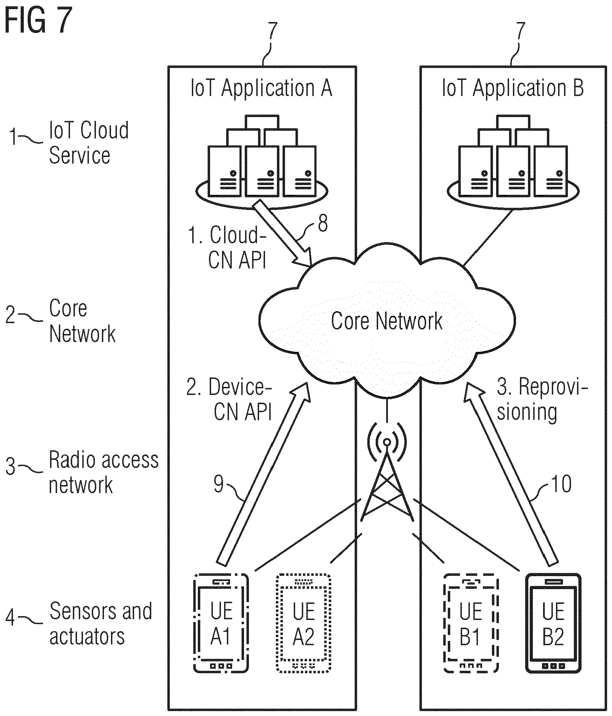

Figure 7 shows the claimed variants of the inventive method, how the IoT application might interface with the cellular IoT network.

Firstly, the CN provides an interface for the IoT cloud service ("Cloud-CN API" in figure 7), which requires an extension of the existing 3GPP specifications. With this solution, the intelligence about paging groups can be placed into the cloud backend of the IoT application, where generally more powerful computation capacity is available. Furthermore, the total cost of ownership for this solution is generally lower due to a centralization, more compute power and less energy constraints compared to a solution running on the embedded IoT devices. This solution is particular beneficial for static and low mobility applications.

Secondly, for applications with higher mobility demand, in particular, a distributed solution running on the embedded IoT devices might be desirable. The CN shall provide an interface to the UEs ("Device-CN API" in figure 7), which is also an extension of the existing 3GPP specifications. A mobile IoT device is then able to update its paging group when it roams between RAN base stations based on internal rules without the need to contact the IoT cloud service before. Thus, the load on the IoT cloud service is reduced and the latency of paging re-grouping lowered.

And thirdly, as the above solutions require extensions of the 3GPP specifications that take time to be agreed and rolled out in the networks, a solution is presented which is called "re-provisioning" that can be used already with existing networks. The pseudo-random assignment of paging resources in today's 4G networks depends upon the IMSI that is stored on the subscriber identification module (SIM) card. Traditionally, the SIM card was supplied physically from the cellular operator. With the advent of embedded-SIM (eSIM) and integrated-SIM (iSIM), it has become state of the art to supply only the SIM profile digitally on demand from the cellular operator whereas the actual SIM hardware is supplied otherwise. The process of loading a SIM profile into an eSIM or iSIM is called (re-)provisioning. Using the re-provisioning procedure, the IoT device is now able to change its IMSI within the network and, thus, it also changes its paging resources. By appropriately selecting the IMSIs beforehand, the proposed invention now allows to assign groups to IoT devices for paging purposes. The benefit of this solution, the immediate availability within current networks, comes at the expense of more signaling traffic. Another limitation is that only the IMSI can be changed, which determines the idle mode DRX resources, but not the TMSI that determines the extended DRX resources.

In recent years, a trend in mobile voice and broadband communication is equipping UEs with two or more SIM cards. Having the modem hardware only once, but being registered in more than one cellular network, results in a modem-internal resource conflict when the POs of different networks overlap in time. This so-called "paging collision" issue has been recently addressed in 3GPP specifications by allowing UEs to request different paging resources to resolve the collision. Thus, the rationale of the feature is completely different to the inventive method, however, the feature also allows the UE to influence its paging resources. The main differentiator to the presented solution is that the paging collision feature is not able to assign UE determined resources, it just ensures that the collusion is resolved.

### List of Reference Signs

- 1: Internet Service
- 2: Core Network
- 3: Radio Access Network
- 4: User equipement, IoT device
- 5: Paging cycle
- 6: Paging message
- 7: IoT application
- 8: Cloud-CN API
- 9: Device-CN API
- 10: Re-provisioning access

## Claims

1. A method for efficiently paging Internet-of-Things devices, IoT devices, which periodically exchange data with IoT cloud services via a cellular network comprising a radio access network, RAN, and a core network, CN, whereas a paging configuration of said IoT devices is maintained in the CN and provided to the RAN on need basis and a paging channel for mobile terminated data is periodically monitored by said IoT devices, wherein IoT devices are assigned and grouped to a same paging occasion within a paging cycle due to traffic patterns of said IoT devices that are correlated in time and space,
**characterized in, that** IoT devices are belonging to one IoT application which is located in the IoT cloud service, wherein IoT devices belonging to static and/or low mobility IoT applications are grouped into the same paging time and/or frequency resources by using an interface between the CN and the IoT cloud service for exchanging information between the IoT application and the CN, whereas a decision logic about paging groups is placed into a cloud backend of the IoT application or
wherein IoT devices belonging to higher mobility applications are grouped into the same paging time and/or frequency resources by using an interface between the CN and the IoT device for exchanging information between the IoT device and the CN, whereas the decision logic about paging groups remains in the IoT device and the IoT device updates its paging group when it roams between RAN base stations based on internal rules.

2. The method for efficiently paging IoT devices according to claim 1, wherein the IoT application combines the usage of multiple interfaces according to which solution fits best the application use case, respectively.

3. The method for efficiently paging IoT devices according to claim 1, wherein paging resources are separated for mobile and static IoT devices.

4. The method for efficiently paging IoT devices according to claims 1 or 2, wherein paging resources are dedicated to one IoT application and/or a selected group of IoT applications and are separated from legacy paging resources.

5. The method for efficiently paging IoT devices according to claim 1, wherein for static IoT devices and fixed paging groups, a single paging group identifier is assigned to all associated IoT devices.

6. The method for efficiently paging IoT devices according to one of the former claims is applied to cellular networks, in particular NB-IoT and eMTC.

7. The method for efficiently paging IoT devices according to one of the former claims is applied to 5G based cellular technologies, like NR-Lite.

## Patentansprüche

1. Verfahren zum effizienten Paging von Internet-der-Dinge-Geräten, IoT-Geräten, die periodisch Daten mit IoT-Cloud-Diensten über ein Mobilfunknetz austauschen, das ein Funkzugangsnetz, RAN, und ein Kernnetz, CN, umfasst, wobei eine Paging-Konfiguration der IoT-Geräte im CN aufrechterhalten und dem RAN auf Bedarfsbasis zur Verfügung gestellt wird und ein Paging-Kanal für mobil beendete Daten periodisch von den IoT-Geräten überwacht wird, wobei IoT-Geräte aufgrund von Verkehrsmustern der IoT-Geräte, die zeitlich und räumlich korreliert sind, innerhalb eines Paging-Zyklus demselben Paging-Anlass zugewiesen und zu diesem Paging-Anlass gruppiert werden,
**dadurch gekennzeichnet, dass** IoT-Geräte zu einer IoT-Anwendung gehören, die sich in dem IoT-Cloud-Dienst befindet, wobei IoT-Geräte, die zu statischen und/oder wenig mobilen IoT-Anwendungen gehören, in dieselbenPaging-Zeit- und/oder Frequenzressourcen gruppiert werden, indem eine Schnittstelle zwischen dem CN und dem IoT-Cloud-Dienst zum Austausch von Informationen zwischen der IoT-Anwendung und dem CN verwendet wird, während eine Entscheidungslogik über Paging-Gruppen in einem Cloud-Backend der IoT-Anwendung platziert ist oder
wobei IoT-Geräte, die zu Anwendungen mit höherer Mobilität gehören, in dieselben Paging-Zeit- und/oder Frequenzressourcen gruppiert werden, indem eine Schnittstelle zwischen dem CN und dem IoT-Gerät zum Austausch von Informationen zwischen dem IoT-Gerät und dem CN verwendet wird, während die Entscheidungslogik über Paging-Gruppen im IoT-Gerät verbleibt und das IoT-Gerät seine Paging-Gruppe aktualisiert, wenn es auf der Grundlage interner Regeln zwischen RAN-Basisstationen roamt.

2. Verfahren zum effizienten Paging von IoT-Geräten nach Anspruch 1, wobei die IoT-Anwendung die Verwendung mehrerer Schnittstellen kombiniert, je nachdem, welche Lösung am besten zum Anwendungsfall passt.

3. Verfahren zum effizienten Paging von IoT-Geräten nach Anspruch 1, wobei Paging-Ressourcen für mobile und stationäre IoT-Geräte getrennt werden.

4. Verfahren zum effizienten Paging von IoT-Geräten nach Anspruch 1 oder 2, wobei die Paging-Ressourcen einer IoT-Anwendung und/oder einer ausgewählten Gruppe von IoT-Anwendungen gewidmet und von den älteren Paging-Ressourcen getrennt sind.

5. Verfahren zum effizienten Paging von IoT-Geräten nach Anspruch 1, wobei für statische IoT-Geräte und feste Paging-Gruppen allen zugehörigen IoT-Geräten eine einzige Paging-Gruppen-Kennung zugewiesen wird.

6. Das Verfahren zum effizienten Paging von IoT-Geräten nach einem der vorhergehenden Ansprüche wird auf Mobilfunknetze, insbesondere NB-IoT und eMTC, angewendet.

7. Das Verfahren zum effizienten Paging von IoT-Geräten nach einem der vorhergehenden Ansprüche wird auf 5G-basierte Mobilfunktechnologien, wie NR-Lite, angewendet.

## Revendications

1. Procédé de radiomessagerie efficace de dispositifs d'Internet des objets, dispositifs IoT, qui échangent périodiquement des données avec des services cloud IoT via un réseau cellulaire comprenant un réseau d'accès radio, RAN, et un réseau central, CN, tandis qu'une configuration de radiomessagerie de ces dispositifs IoT est maintenue dans le CN et fournie au RAN en fonction des besoins, et un canal de radiomessagerie pour les données mobiles terminées est périodiquement surveillé par ces dispositifs IoT, les dispositifs IoT étant affectés et regroupés à une même occasion de radiomessagerie au cours d'un cycle de radiomessagerie en raison des schémas de trafic de ces dispositifs IoT qui sont corrélés dans le temps et dans l'espace, **caractérisé en ce que les dispositifs** IoT appartiennent à une application IoT située dans le service cloud IoT, dans lequel les dispositifs IoT appartenant à des applications IoT statiques et/ou à faible mobilité sont regroupés dans les mêmes ressources de temps et/ou de fréquence de radiomessagerie en utilisant une interface entre le CN et le service cloud IoT pour échanger des informations entre l'application IoT et le CN, tandis qu'une logique de décision concernant les groupes de radiomessagerie est placée dans un backend cloud de l'application IoT ; ou
dans lequel les dispositifs IoT appartenant à des applications à mobilité élevée sont regroupés dans les mêmes ressources de temps et/ou de fréquence de radiomessagerie en utilisant une interface entre le CN et le dispositif IoT pour échanger des informations entre le dispositif IoT et le CN, tandis que la logique de décision concernant les groupes de radiomessagerie reste dans le dispositif IoT et que le dispositif IoT met à jour son groupe de radiomessagerie lorsqu'il passe d'une station de base RAN à l'autre sur la base de règles internes.

2. Procédé de radiomessagerie efficace des dispositifs IoT selon la revendication 1, dans lequel l'application IoT combine l'utilisation de plusieurs interfaces en fonction de la solution qui correspond le mieux au cas d'utilisation de l'application, respectivement.

3. Procédé de radiomessagerie efficace des dispositifs IoT selon la revendication 1, dans lequel les ressources de radiomessagerie sont séparées pour les dispositifs IoT mobiles et statiques.

4. Procédé de radiomessagerie efficace des dispositifs IoT selon les revendications 1 ou 2, dans lequel les ressources de radiomessagerie sont dédiées à une application IoT et/ou à un groupe sélectionné d'applications IoT et sont séparées des ressources de radiomessagerie héritées.

5. Procédé de radiomessagerie efficace des dispositifs IoT selon la revendication 1, dans lequel, pour les dispositifs IoT statiques et les groupes de radiomessagerie fixes, un seul identifiant de groupe de radiomessagerie est attribué à tous les dispositifs IoT associés.

6. Le procédé de radiomessagerie efficace des dispositifs IoT selon l'une des revendications précédentes est appliquée aux réseaux cellulaires, en particulier NB-IoT et eMTC.

7. Le procédé de radiomessagerie efficace des dispositifs IoT selon l'une des revendications précédentes est appliquée aux technologies cellulaires basées sur la 5G, comme NR-Lite.
